# EUROPEAN PATENT APPLICATION

(11) **EP 1 736 908 A2**
(43) Date of publication of application: **27.12.2006**
(21) Application number: 06012635.6
(22) Date of filing: 20.06.2006
(51) Int. Cl.: G06F 21/20

(54) **Method for authenticating user using camera module and mobile terminal therefor**

(30) Priority: 20.06.2005 KR 20050053253
(71) Applicant: Samsung Electronics Co., Ltd., Suwon-si, Gyeonggi-Do (KR)
(72) Inventor: Kim, Soon-Ok, Yeongtong-gu Suwon-si Gyeonggi-do (KR); Kim, Dae-Gyu, Yeongtong-gu Suwon-si Gyeonggi-do (KR); Park, Yong-Soo, Yeongtong-gu Suwon-si Gyeonggi-do (KR)
(74) Representative: Grünecker, Kinkeldey, Stockmair & Schwanhäusser Anwaltssozietät

(57) **Abstract**

A mobile terminal authenticates a user using a camera module included therein. If a particular locked function is selected by a user, a controller enables the camera module and receives a motion pattern from the user through the camera module. The controller compares the motion pattern received through the camera module with a motion pattern previously stored in a memory and the controller unlocks the locked function and enables the corresponding function if the motion patterns are identical to each other.

## Description

The present invention relates generally to a method for authenticating a user using a camera module, and a mobile terminal therefor.

With the recent popularization of mobile terminals, users can enjoy various services, such as a traffic information service for providing road condition information to a car driver by using a screen of a mobile terminal, My Bell service for allowing a user to register his/her own unique bell sounds, and mobile paging service for providing text information indicating arrival of a voice message at a voice mail box to a user. Because the mobile terminals are designed to support particular functions for receiving various additional services from a service provider, such as a voice mail box function and a special information receiving function, the mobile terminals' users are provided with such conveniences in addition to the conventional phone call function.

As the various services and additional functions increasingly spread, mobile communication systems provide not only voice and data services but also Integrated Services Digital Network (ISDN)-class multimedia service supporting a data rate of several Mb/s. Recently, terminals suitable for the mobile communication systems have been developed. For example, a mobile terminal with a camera module having a function capable of photographing a subject and storing the photographed image has come into the market.

With the popularization of the mobile terminals, users can conveniently take pictures at any time and in any place using the mobile terminals. In addition, because the mobile terminals equipped with a camera are always carried by users, the users can take pictures of critical situations during emergencies and can also photograph at any time, when necessary.

To realize those advantages, there is a need to efficiently utilize the mobile terminals with a camera module in various methods. In order to increase usefulness of the mobile terminals and to meet various user demands, it is necessary to apply the above-stated various services and additional functions to the mobile terminals equipped with a camera. For example, it is possible to implement an optical character recognition (OCR) function capable of recognizing characters such as phone numbers and data printed on a document using the camera module included in the mobile terminals.

Although the camera module included in the mobile terminals has various uses, the application of the camera module is directed to the OCR function.

It is, therefore, the object of the present invention to provide a method for authenticating a user using a camera module, and a mobile terminal therefor.

This object is solved by the subject matter of the independent claims.

Preferred embodiments are defined in the dependent claims.

According to one aspect of the present invention, there is provided a mobile terminal in which a camera module receives a motion pattern of a user and a memory stores a motion pattern for a locking function (a function requiring an authentication when locked in order to be enabled). If a particular locked function is selected, a controller enables the camera module, compares a motion pattern input through the camera module with a motion pattern stored in the memory, and determines whether to unlock the locked function according to the comparison result.

According to another aspect of the present invention, there is provided a mobile terminal with a camera module for receiving a motion made by a user. If a particular locked function is selected, a controller enables the camera module, recognizes a trace corresponding to a motion input through the camera module, recognizes a character depending on the generated rut, compares the recognized character with a stored password, and determines whether to unlock the locked function according to the comparison result.

The present invention will become more apparent from the following detailed description when taken in conjunction with the accompanying drawings in which:
FIG 1 is a diagram illustrating a user authentication mode according to an embodiment of the present invention;
FIG. 2 is a block diagram of a mobile terminal according to an embodiment of the present invention;
FIG. 3 is a flowchart illustrating a control operation of registering a user motion pattern according to an embodiment of the present invention;
FIG. 4 is a flowchart illustrating a control operation of authenticating a user according to an embodiment of the present invention; and
FIG. 5 is a flowchart illustrating a control operation of authenticating a user according to another embodiment of the present invention.

Several exemplary embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for clarity and conciseness.

In an exemplary embodiment of the present invention, if a locked function (a function requiring an authentication that is in the locked state) is selected by a user, a mobile terminal enables a camera module and receives a motion pattern from the user. The mobile terminal compares the motion pattern received through the camera module with a locking pattern previously stored therein, and unlocks the locked function if the patterns are identical to each other.

In another exemplary embodiment of the present invention, a mobile terminal generates a rut (or furrow) corresponding to the motion input by the user, and recognizes characters based on the rut. Subsequently, the mobile terminal compares the recognized characters with a password stored therein, and unlocks the locked function if the recognized characters are coincident with the password.

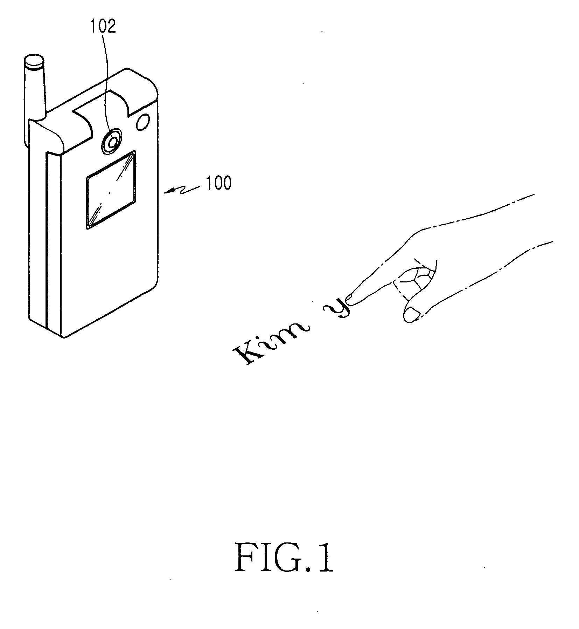

FIG. 1 is a diagram illustrating a user authentication mode according to the present invention. Referring to FIG. 1, a mobile terminal 100 includes a camera module 102. The mobile terminal 100 enables the camera module 102 if a user selects a particular locked function. The user makes a particular motion within the photographic field of the camera module 102. The user's motion has a particular pattern according to its movement. The mobile terminal 100 compares the motion pattern input from the user with a motion pattern previously stored therein. If the user input motion pattern is identical to the stored motion pattern, the mobile terminal 100 unlocks the locked function, enabling the corresponding function. Therefore, the motion pattern input by the user must be identical every time. In FIG. 1, the particular motion refers to a motion made by signing his/her name with a finger by the user, however the present invention is not restricted to this.

Alternatively, the mobile terminal 100 generates a rut corresponding to the motion input by the user. In other words, if the user makes a motion for particular characters as shown in FIG. 1, the mobile terminal 100 generates a rut according to the motion and recognizes characters depending on the rut. The mobile terminal 100 compares the recognized characters with a password stored therein, and unlocks the locked function if the recognized characters are coincident with the password.

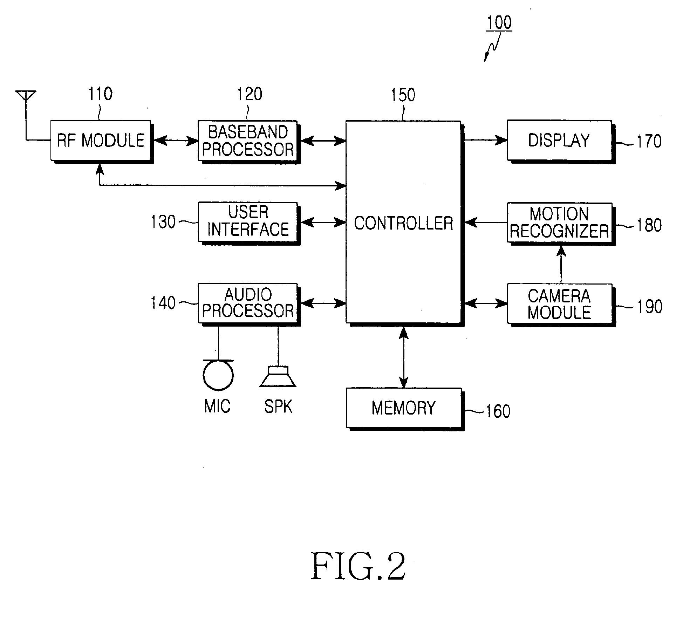

A block diagram of the mobile terminal 100 will now be described in detail with reference to FIG. 2. FIG. 2 is a block diagram of a mobile terminal according to the present invention. A mobile terminal 100 includes a radio frequency (RF) module 110, a baseband processor 120, a user interface 130, an audio processor 140, a controller 150, a memory 160, a display 170, a motion recognizer 180, and a camera module 190.

The controller 150 controls the overall operation of the mobile terminal 100 to provide a user authentication function according to an embodiment of the present invention. The controller 150 enables the camera module 190 if a particular locked function is selected by a user. At this point, the user inputs a motion pattern that is equivalent to the motion pattern previously stored therein, in a photographic field of the camera module 190. The controller 150 recognizes the motion pattern input by the user through the motion recognizer 180, and compares the recognized motion pattern with the motion pattern previously stored in the memory 160. Herein, the motion recognizer 180 recognizes a motion photographed through the camera module 190 and provides the motion recognition result to the controller 150. The controller 150 compares the motion pattern input by the user with the motion pattern previously stored in the memory 160. and the controller unlocks the particular locked function selected by the user to enable the corresponding function if the user input motion pattern is identical to the previously stored motion pattern.

Alternatively, the controller 150 enables the camera module 190 if a particular locked function is selected by the user. Similarly, the user inputs a motion for unlocking in the photographic field of the camera module 190. Then the controller 150 generates a rut for the motion input by the user, and recognizes characters based on the rut. Subsequently, the controller 150 compares the recognized characters with a password previously stored in the memory 160, and unlocks the locked function to enable the corresponding function if the recognized characters are coincident with the password.

The RF module 110 exchanges RF signals with a base station via an antenna. The RF module 110 converts a received RF signal into an intermediate frequency (IF) signal and outputs the IF signal to the baseband processor 120. The RF module 110 converts an IF signal received from the baseband processor 120 into an RF signal and transmits the RF signal via the antenna. The baseband processor 120, serving as a baseband analog (BBA) Application Specific Integrated Circuit (ASIC) for providing an interface between the controller 150 and the RF module 110, converts a digital baseband signal provided from the controller 150 into an analog IF signal to apply the analog IF signal to the RF module 110, and converts an analog IF signal provided from the RF module 110 into a digital baseband signal to apply the digital baseband signal to the controller 150.

The audio processor 140, under the control of the controller 150, converts received audio data into an audible sound through a speaker SPK to output the audible sound for the user, and converts a voice from the user into an electrical signal through a microphone MIC to provide the electrical signal to the controller 150. The user interface 130 includes a plurality of alphanumeric keys and function keys, and outputs key input data corresponding to a key pressed by the user to the controller 150.

The memory 160 includes a read only memory (ROM) and a random access memory (RAM) for storing a plurality of programs and information necessary during a control operation of the controller 150, and a voice memory. The memory 160 stores motion pattern information and information for character recognition according to an embodiment of the present invention. The display 170, commonly implemented with a liquid crystal display (LCD), displays various messages and icons under the control of the controller 170.

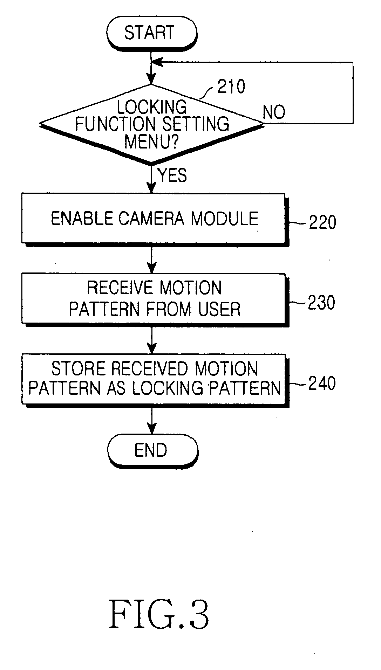

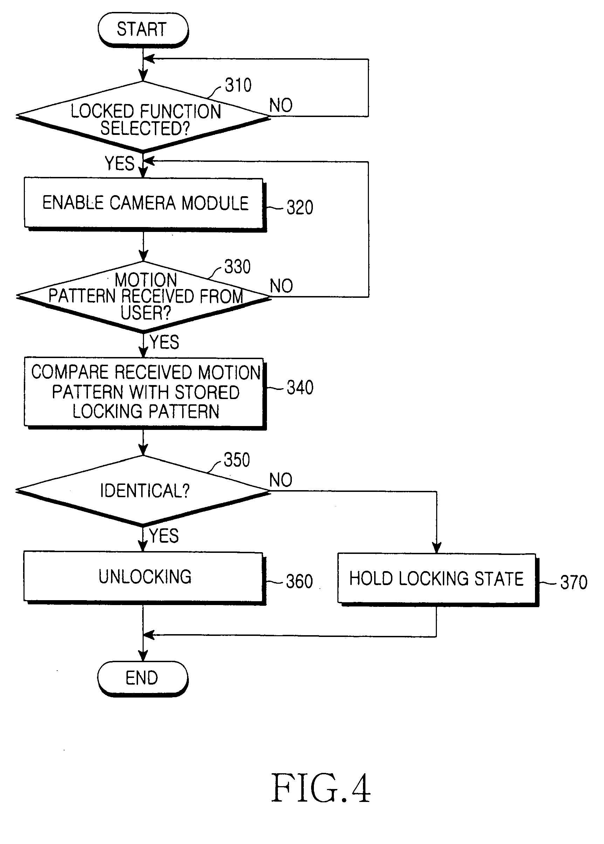

Using FIGs. 3 and 4, a description will now be made of a control operation of registering a user motion pattern and authenticating a user using the user motion pattern in a mobile terminal.

FIG. 3 is a flowchart illustrating a control operation of registering a user motion pattern according to the present invention. A controller 150 of a mobile terminal determines in step 210 whether a locking function setting menu is selected by a user. Every function of the mobile terminal can be locked by the user. To unlock the locked function, the user must input a predetermined password or a predetermined motion pattern according to an embodiment of the present invention. The locking function is provided to prevent an unauthorized person from accessing private information in the mobile terminal or originating a call without approval of the user.

If the locking function setting menu is selected by the user, the controller 150 enables a camera module 190 in step 220, and receives a motion pattern from the user in step 230. Thereafter, in step 240, the controller 150 stores the user input motion pattern in a memory 160 as a locking pattern.

A control operation of authenticating a user using the registered motion pattern will now be described with reference to FIG. 4. FIG. 4 is a flowchart illustrating a control operation of authenticating a user according to the present invention. A controller 150 determines in step 310 whether a locked function is selected by a user. If a locked function is selected by the user, the controller 150 enables a camera module 190 in step 320. Then the user may input a motion pattern that is equivalent to the motion pattern previously stored in a memory 160, in a photographic field of the camera module 190. In step 330, the controller 150 determines whether a motion pattern is input from the user. If a motion pattern is input by the user, the controller 150 proceeds to step 340 where it compares the user input motion pattern with the motion pattern previously stored in the memory 160, i.e., the locking pattern.

If it is determined in step 350 that the user input motion pattern is identical to the previously stored motion pattern, the controller 150 proceeds to step 360 where it unlocks the locked function selected by the user, thereby enabling the corresponding function. However, if it is determined in step 350 that the user input motion pattern is not identical to the previously stored motion pattern, the controller 150 proceeds to step 370 where it maintains the locked state of the corresponding function.

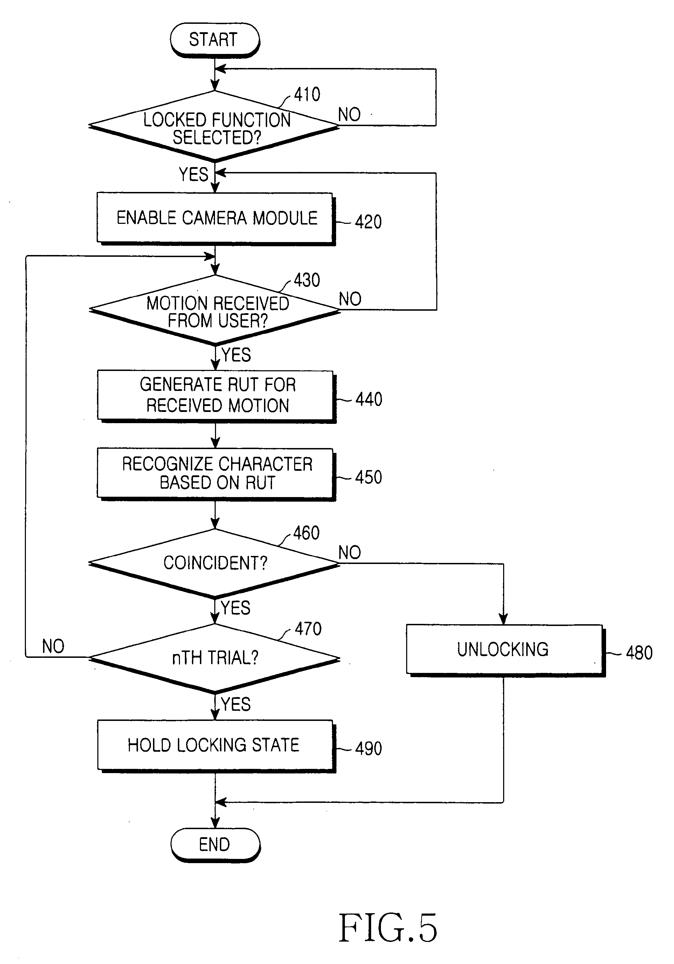

FIG. 5 is a flowchart illustrating a control operation of authenticating a user according to the present invention. Referring to FIG. 5, a controller 150 determines in step 410 whether a particular locked function is selected by a user. If the particular locked function is selected by the user, the controller 150 enables a camera module 190 in step 420. Thereafter, the controller 150 determines in step 430 whether a motion is input from the user. If a motion is input by the user, the controller 150 generates a rut corresponding to the input motion in step 440. The controller 150 can generate the rut according to a movement of the user input motion. Subsequently, the controller 150 recognizes characters based on the input rut in step 450, and compares the input characters, i.e., the recognized characters with a password stored in a memory 160 in step 460. If the input characters match the stored password, the controller 150 proceeds to step 480 where it unlocks the locked function, thereby enabling the corresponding function. However, if the input characters are not coincident with the stored password, the controller 150 determines in step 470 whether the current number of motion inputs for the password has reached a predetermined number 'n'. This embodiment provides the user with a predetermined number 'n' of chances to input a motion for password input. Therefore, if the current number of motion inputs for the password has reached the predetermined number 'n', the controller 150 proceeds to step 490 where it holds the locking state. However, if the current number of motion inputs for the password has not reached the predetermined number 'n', the controller 150 returns to step 430 where it receives again a motion for password input from the user.

Although the embodiments of the present invention recognize characters using a motion pattern of a user for user authentication, the present invention is not limited to this. It would be obvious to those skilled in the art that the present invention can be applied to every application that requires a character input function, such as a memo pad input function and a short message service (SMS) character input function.

As can be understood from the foregoing description, the novel mobile terminal authenticates a user using a camera module included therein, thereby extending application of the camera module and increasing user convenience. In addition, the security/locking function based on the camera module included in the mobile terminal can substitute for a possible biometric technology, such as a fingerprint recognition technology, required for the security/locking function in the mobile terminal.

While the invention has been shown and described with reference to a certain preferred embodiment thereof, it will be understood by those skilled in the art that various changes in form and details may be made therein without departing from the scope of the invention as defined by the appended claims.

## Claims

1. A mobile terminal comprising:
a camera module for receiving a motion pattern of a user;
a memory for storing a motion pattern for a locking function; and
a controller for, if a particular locked function is selected, enabling the camera module, comparing a motion pattern input through the camera module with a motion pattern stored in the memory, and determining whether to unlock the locked function according to the comparison result.

2. The mobile terminal of claim 1, wherein if the motion pattern input through the camera module is identical to the motion pattern stored in the memory, the controller unlocks the locked function thereby enabling the corresponding function.

3. The mobile terminal of claim 1 or 2, wherein if the motion pattern input through the camera module is not identical to the motion pattern stored in the memory, the controller maintains in a locked state of the locking function.

4. The mobile terminal of claim 1 or 2, wherein the motion pattern can repeatedly be input by the user if the motion input pattern is not identical to the motion pattern stored in the memory.

5. A method for authenticating a user in a mobile terminal with a camera module for receiving a motion pattern of the user, the method comprising:
storing a motion pattern for a locking function;
enabling the camera module if a particular locked function is selected;
comparing a motion pattern input through the camera module with a motion pattern stored in a memory; and
determining whether to unlock the locked function according to the comparison result.

6. The method of claim 5, further comprising unlocking the locked function and enabling the corresponding function if the motion pattern input through the camera module is identical to the motion pattern stored in the memory.

7. The method of claim 5 or 6, further comprising maintaining a locked state of the locking function if the motion pattern input through the camera module is not identical to the motion pattern stored in the memory.

8. A mobile terminal comprising:
a camera module for receiving a motion of a user; and
a controller for, if a particular locked function is selected, enabling the camera module, generating a rut corresponding to a motion input through the camera module, recognizing a character depending on the generated rut, comparing the recognized character with a stored password, and determining whether to unlock the locked function according to the comparison result.

9. The mobile terminal of claim 8, wherein if the recognized character is coincident with the stored password, the controller unlocks the locked function thereby enabling the corresponding function.

10. The mobile terminal of claim 8 or 9, wherein if the recognized character is not coincident with the stored password, the controller maintains in a locked state of the locking function.

11. The mobile terminal of claim 10, wherein the controller comprises:
determining whether the current number of motion inputs has reached a predetermined number, if the recognized character is not coincident with the stored password; and
continuing to receive a motion for password input from the user, if the current number of motion inputs has not reached the predetermined number.

12. A method for authenticating a user in a mobile terminal with a camera module for receiving a motion pattern of the user, the method comprising:
enabling the camera module if a particular locked function is selected;
generating a rut corresponding to a motion input through the camera module, and recognizing a character depending on the generated rut; and
comparing the recognized character with a stored password, and determining whether to unlock the locked function according to the comparison result.
